(19) Europäisches Patentamt
European Patent Office
Office européen des brevets

(11) EP 4 307 427 B1

(12) **EUROPEAN PATENT SPECIFICATION**

(45) Date of publication and mention of the grant of the patent:
**03.06.2026 Bulletin 2026/23**

(21) Application number: **23763630.3**

(22) Date of filing: **30.01.2023**

(51) International Patent Classification (IPC):
***H01M 10/0567*** *(2010.01)* ***H01M 4/131*** *(2010.01)*
***H01M 4/525*** *(2010.01)* ***H01M 4/587*** *(2010.01)*
***H01M 10/0525*** *(2010.01)* ***H01M 10/42*** *(2006.01)*
***H01M 4/133*** *(2010.01)*

(52) Cooperative Patent Classification (CPC):
**H01M 4/525; H01M 4/131; H01M 4/133; H01M 4/587; H01M 10/0525; H01M 10/0567; H01M 10/4235;** H01M 2300/002; Y02E 60/10

(86) International application number:
**PCT/KR2023/001356**

(87) International publication number:
**WO 2023/167431 (07.09.2023 Gazette 2023/36)**

(54) **NON-AQUEOUS ELECTROLYTE SOLUTION COMPOSITION AND LITHIUM SECONDARY BATTERY COMPRISING SAME**

WASSERFREIE ELEKTROLYTLÖSUNGSZUSAMMENSETZUNG UND LITHIUMSEKUNDÄRBATTERIE DAMIT

COMPOSITION DE SOLUTION ÉLECTROLYTIQUE NON AQUEUSE ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.03.2022 KR 20220026714**

(43) Date of publication of application:
**17.01.2024 Bulletin 2024/03**

(73) Proprietor: **LG Energy Solution, Ltd.**
**Seoul 07335 (KR)**

(72) Inventors:
- **JI, Su Hyeon**
  **Daejeon 34122 (KR)**
- **LEE, Chul Haeng**
  **Daejeon 34122 (KR)**
- **AHN, Kyoung Ho**
  **Daejeon 34122 (KR)**
- **HAN, Jun Hyeok**
  **Daejeon 34122 (KR)**
- **SHIN, Won Kyung**
  **Daejeon 34122 (KR)**
- **LEE, Won Tae**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**WO-A1-2007/126262**
**CN-A- 103 078 140**
**CN-A- 114 069 043**
**KR-A- 20150 125 928**
**KR-A- 20210 094 633**
**KR-A- 20210 106 817**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

[Technical Field]

The present invention relates to a non-aqueous electrolyte composition and a lithium secondary battery comprising the same.

This application claims the benefit of priority based on Korean Patent Application No. 10-2022-0026714 filed on March 02, 2022.

[Background Technology of the Invention]

In recent years, secondary batteries have been widely applied in small devices such as portable electronics, as well as in medium and large devices such as battery packs or power storage device in hybrid or electric vehicles. These secondary batteries include non-aqueous electrolytic liquid batteries such as lithium-ion batteries, lithium batteries, lithium-ion capacitors, and sodium-ion batteries.

Among these non-aqueous electrolyte batteries, lithium-ion batteries are used by injecting an electrolyte into a battery cell comprising a positive electrode containing a positive electrode active material capable of intercalating and deintercalating lithium and a negative electrode containing a negative electrode active material capable of intercalating and deintercalating lithium. In particular, the electrolyte is an organic solvent in which lithium salts are dissolved, and it is important in determining the stability and performance of the lithium secondary battery.

For example, $LiPF_6$, which is most commonly used as a lithium salt in electrolytes, reacts with the electrolyte solvent to generate HF while promoting the depletion of the solvent. In addition to generating a large amount of gas under high temperature conditions, HF can also elute metal ions from positive electrode active materials, etc. In this way, eluted metal ions occur in the form of precipitation on the surface of the negative electrode, which causes the negative electrode potential to rise and the cell OCV to fall, thereby reducing the performance of the cell as well as its lifetime and high temperature safety.

[Related Art]

Korean Patent Publication No. 10-2021-0106817
CN 114 069 043 A
CN 103 078 140 A

[Description of the Invention]

[Technical Problem]

Therefore, the purpose of the present invention is to provide a technology development that can prevent direct contact between a positive electrode and an electrolyte by forming a film on the surface of the electrode, suppress gas generation by preventing direct contact between the positive electrode and HF, $PF_5$, etc., and reducing the oxidative decomposition of the electrolyte, improve capacity retention rate by improving the phenomenon of metal ion precipitation from the positive electrode, while inhibiting the elution of metal at high temperatures can prevent the deterioration of battery life and safety.

[Technical Solution]

To solve the problems described above, the present invention provides an electrolyte composition for a lithium secondary battery, the electrolyte composition comprising a non-aqueous organic solvent; a lithium salt; and an electrolyte additive including one or more of the compounds represented by Formula 1 below:

[Formula 1]

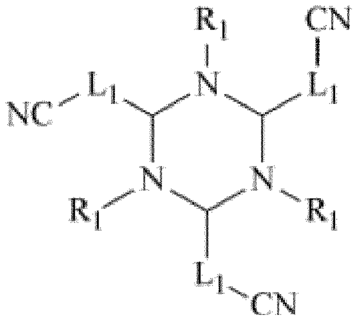

in Formula 1 above,

$R_1$ is hydrogen or an alkyl group having 1 to 4 carbons,
$L_1$ is directly bonded or alkylene groups having 1 to 4 carbons.

Specifically, $R_1$ may be hydrogen, a methyl group, an ethyl group, or a propyl group, and $L_1$ is directly bonded, a methylene group, an ethylene group, or a propylene group.

More specifically, the compound represented by Formula 1 may include one or more compounds represented by <Structural Formula 1> to <Structural Formula 6>:

| <Structural Formula 1> | <Structural Formula 2> | <Structural Formula 3> |
|---|---|---|
| 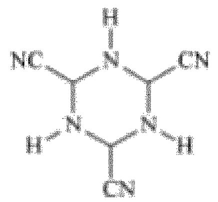 | 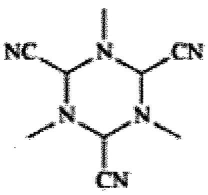 | 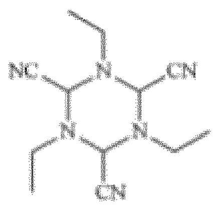 |
| <Structural Formula 4> | <Structural Formula 5> | <Structural Formula 6> |
| 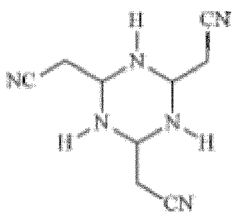 | 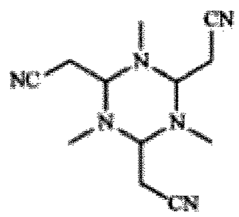 | 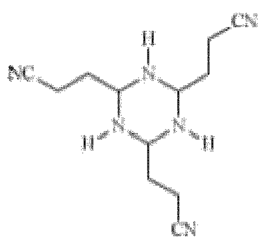 |

Moreover, according to a preferred embodiment of the invention as claimed in appended claim 4, the electrolyte may encompass a compound represented by Formula 2, wherein the compound represented by Formula 2 may include one or more compounds represented by <Formula 7> or <Formula 8>:

| <Structural Formula 7> | <Structural Formula 8> |
|---|---|

(continued)

| | |
|---|---|
| 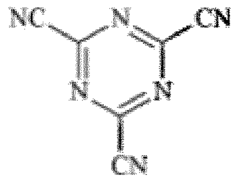 | 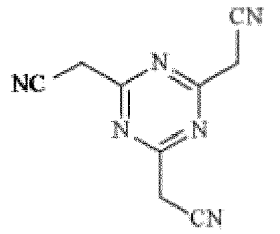 |

In addition, the electrolyte additive, in the case of including a compound represented by Formula 1 and a compound represented by Formula 2, may include the compound represented by Formula 1 and the compound represented by Formula 2 in a 1:0.05 to 20 weight ratio.

Moreover, the electrolyte additive is included in 0.01 to 30 wt% based on a total weight of the electrolyte composition.

Additionally, the electrolyte composition may further include one or more auxiliary additives selected from vinylene carbonate (VC), vinyl ethylene carbonate (VEC), fluoroethylene carbonate (FEC), propane sulfone (PS), 1,3-propane sulfone (PRS), ethylene sulfate (ESa), succinonitrile (SN), adiponitrile (AN), hexane tricarbonitrile (HTCN), gamma-butyrolactone (GBL), biphenyl (BP), cyclohexyl benzene (CHB), or tert-amyl benzene (TAB).

Moreover, the lithium salt may include one or more species selected from LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, and $(FSO_2)_2NLi$.

In addition, the non-aqueous organic solvent may include one or more of N-methyl-2-pyrrolidinone, ethylene carbonate, propylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxymethane, dioxolane derivatives, sulfolane, methyl sulfolane, 1,3-dimethyl-2-imidazolidinone, propylene carbonate derivative, tetrahydrofuran derivative, ether, methyl pyrophosphate, or ethyl propionate.

Furthermore, in an exemplary embodiment, the present invention provides a lithium secondary battery, the lithium secondary battery comprising:

a positive electrode including one or more positive electrode active materials of lithium metal oxide represented by Formula 3 or Formula 4 below;
a negative electrode;
a separator interposed between the positive electrode and the negative electrode; and
an electrolyte composition according to above-described present invention:

[Formula 3] $Li_x[Ni_yCo_zMn_wM^1_v]O_2$

[Formula 4] $LiM^2_pMn_{(2-p)}O_4$

in Formula 3 and Formula 4,

$M^1$ is one or more element selected from W, Cu, Fe, V, Cr, Ti, Zr, Zn, Al, In, Ta, Y, La, Sr, Ga, Sc, Gd, Sm, Ca, Ce, Nb, Mg, B, and Mo, wherein x, y, z, w, and v are $1.0 \leq x \leq 1.30$, $0 \leq y < 1$, $0 \leq z \leq 1$, $0 \leq w \leq 1$, $0 \leq v \leq 0.1$, respectively,

$$y+z+w+v=1,$$

$M^2$ is Ni, Co, or Fe, and
p is $0.05 \leq p \leq 0.6$.

Here, the positive electrode active material may include one or more species selected from $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, or $LiNi_{0.5}Mn_{1.5}O_4$.

In addition, the negative electrode active material may include one or more carbon materials selected from natural graphite, artificial graphite, expanded graphite, hard carbon, carbon black, acetylene black, and ketjen black.

Moreover, the negative electrode active material may include one or more silicon materials of silicon (Si), silicon carbide (SiC), or silicon oxide ($SiO_q$, where $0.8 \leq q \leq 2.5$).

In this case, the silicon material may be included at 1 to 20wt% based on a total weight of the negative electrode active material.

[Advantageous Effects]

The electrolyte composition according to the present invention can not only effectively reduce gas generated during charging and discharging of the lithium secondary battery by including one or more electrolyte additives of the compound represented by Formula 1 or the compound represented by Formula 2, but also has an advantage of strengthening the SEI layer on the electrode surface, thereby improving the storage characteristics and life characteristics at high temperatures.

[Best Mode for Carrying Out the invention]

The present invention is subject to various modifications and can have many embodiments, and specific embodiments are described in detail in the following description. However, this is not intended to limit the invention to any particular embodiment and should be understood to include all modifications, equivalents and variations within the scope of the invention as claimed in the appended claims.

In the present invention, the terms "include" or "have" are intended to designate the presence of the features, numbers, steps, actions, components, parts, or combinations thereof recited in the specification, and not to preclude the presence or absence of one or more other features, numbers, steps, actions, components, parts, or combinations thereof.

Also, in the present invention, when a part of a layer, membrane, area, plate, etc. is described as being "above" another part, this includes not only when it is "directly above" another part, but also when there is another part in between. Conversely, when a part of a layer, membrane, area, plate, etc. is described as being "below" another part, this includes not only when it is "directly below" another part, but also when there is another part in between. Also, in the present application, being disposed "on top" may include not only being disposed on top, but also being disposed on the bottom.

Also, in the present invention, "comprising as a major component" may mean comprising at least 50wt%, at least 60wt%, at least 70wt%, at least 80wt%, at least 90wt%, or at least 95wt% of a defined component relative to the total weight. For example, "comprising graphite as the primary component of the negative electrode active material" may mean comprising at least 50 wt%, at least 60 wt%, at least 70 wt%, at least 80 wt%, at least 90 wt%, or at least 95 wt% graphite based on the total weight of the negative electrode active material, and in some cases may mean that the entire negative electrode active material is composed of graphite and comprises 100wt% graphite.

Hereinafter, the present invention will be described in more detail.

**Electrolyte composition for secondary battery**

The present invention provides an electrolyte composition for a lithium secondary battery, the electrolyte composition comprising:

a non-aqueous organic solvent;
a lithium salt; and
an electrolyte additive including one or more the compounds represented by the following Formula 1:

[Formula 1]

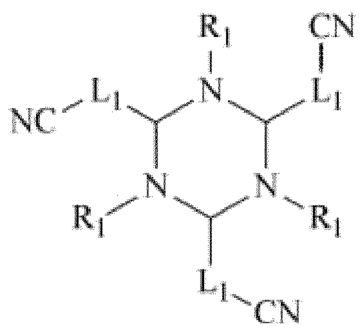

in Formula 1above,

$R_1$ is hydrogen or an alkyl group having 1 to 4 carbons,
$L_1$ is directly bonded or alkylene groups having 1 to 4 carbons.

Here, $R_1$ may be hydrogen, a methyl group, an ethyl group, or a propyl group, and $L_1$ is directly bonded, or may be a methylene group, an ethylene group, or a propylene group.

By including a nitrile-based compound of Formula 1 having a structure in which a nitrile group is introduced into a six-membered cyclic hydrocarbon group containing three nitrogen atoms (N) symmetrically, the electrolyte composition for lithium secondary batteries according to the present invention is not only possible to prevent the elution of metals from the electrode active material, especially the positive electrode active material upon exposure to high temperatures, but can also stably and uniformly form an organic and/or inorganic film on the surface of the positive electrode and/or the negative electrode upon activation, thereby inhibiting the decomposition of the electrolyte and the generation of gas when the battery is exposed to high temperature.

Specifically, in the nitrile-based compounds represented by Formula 1, since the nitrogen atoms contained within the six-membered cyclic hydrocarbon group have a strong complexing action on the transition metals when applied as additives to the electrolyte composition, it can directly participate in the solvation shell of lithium ions even at low potentials during the initial charge-discharge activation of the cell, resulting in the uniform formation of a negatively charged and/or inorganic film through reduction reactions on the negative electrode surface, while simultaneously forming an inorganic film through oxidation reactions on the positive electrode surface. These films can inhibit the decomposition of the electrolyte and the generation of gas when the lithium secondary battery is exposed to high temperatures, thereby improving the safety issues caused by the ignition and/or explosion of the secondary battery.

In addition, the nitrile group of the above nitrile-based compound is introduced into the carbon atom of the six-membered ring hydrocarbon group containing three nitrogen atoms, which is less exposed to the influence of nitrogen atoms and is easy to interact with metals, so it can be chelated to the metal in the positive electrode active material to stabilize the positive electrode active material, or have the effect of capturing the metal eluted from the positive electrode active material, thereby further improving the high temperature performance and safety of the lithium secondary battery.

To this end, the electrolyte composition of the present invention may include one or more the compounds represented by Formula 1 as an electrolyte additive.

Here, the compound represented by Formula 1 may include one or more of a compounds represented by any one of <Structural Formula 1> to <Structural Formula 6> below:

| <Structural Formula 1> | <Structural Formula 2> | <Structural Formula 3> |
|---|---|---|
| 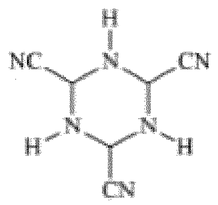 | 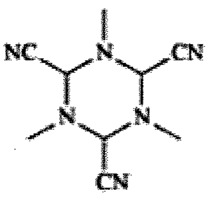 | 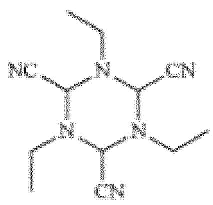 |
| <Structural Formula 4> | <Structural Formula 5> | <Structural Formula 6> |
| 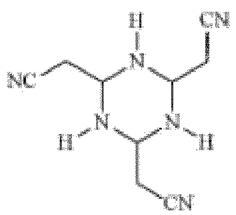 | 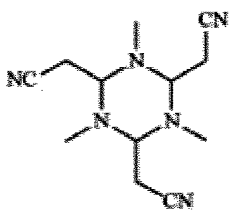 | 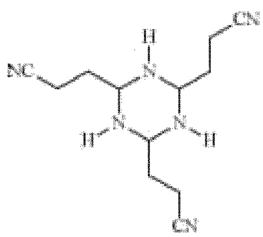 |

The compounds represented by <Structural Formula 1> to <Structural Formula 6> above are excellent for capturing eluted metals by including six-atom saturated hydrocarbon groups containing three nitrogen atoms and nitrile groups. In particular, the compounds represented by <Structural Formula 1> or <Structural Formula 4> in which a hydrogen atom is bonded to the nitrogen atom can easily expose non-covalent electron pairs of the nitrogen atom, thereby having an advantage of forming a more uniform film on the electrode, especially on the surface of the positive electrode, during activation.

In addition, the compounds represented by Formula 2 as disclosed in appended claim 4 may include compounds represented by <Structural Formula 7> or <Structural Formula 8> below:

| <Structural Formula 7> | <Structural Formula 8> |
|---|---|
| 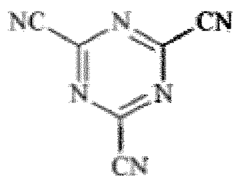 | 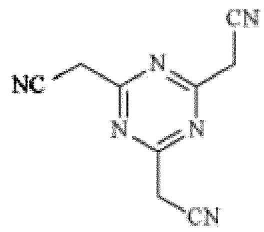 |

Since the compound represented by <Structural Formula 7> or <Structural Formula 8> includes a nitrogen atom inside a six-membered aromatic hydrocarbon group, it is easy to expose the non-covalent electron pair of the nitrogen atom, so that a more uniform film can be formed on the electrode, especially on the surface of the positive electrode, during activation, and the decomposition of the electrolyte composition can be more suppressed, so that gas can be prevented from being generated during charging and discharging of the secondary battery.

Furthermore, the electrolyte additive may include a compound represented by Formula 1 and a compound represented by Formula 2, in which case the respective compounds may be combined in a certain ratio. Specifically, the electrolyte additive may include a compound represented by Formula 1 and a compound represented by Formula 2 in a weight ratio of 1:0.05 to 20, and more specifically in a weight ratio of 1:0.1 to 0.4, 1:0.2 to 0.4, 1:0.05 to 0.2, 1:0.9 to 1.2, 1:1.5 to 3, 1:2 to 5, 1:5 to 10, 1:10 to 20, 1:2 to 20, or 1:1.1 to 1.5. By adjusting the mixing ratio of the compound represented by Formula 1 and the compound represented by Formula 2 to the above range, the present invention can further improve the high temperature stability of the electrolyte composition.

In addition, the electrolyte additive is included in the electrolyte composition at a specific content. Specifically, the electrolyte additive is included from 0.01 to 30 wt% based on the total weight of the electrolyte composition, more specifically, from 0.01 to 20 wt%; 0.01 to 10 wt%; 0.01 to 5 wt%; 5 to 10 wt%; 10 to 30 wt%; 15 to 25 wt%; or 10 to 20 wt% based on the total weight of the electrolyte composition. By using an excessive amount of electrolyte additive outside the above-described range, the present invention can prevent the wettability of the electrode and the separator from decreasing due to an increase in the viscosity of the electrolyte composition, and at the same time prevent the ionic conductivity of the electrolyte composition from decreasing, resulting in a decrease in the battery performance. In addition, the present invention can prevent the effect of the electrolyte additive from being minimally implemented by using a small amount of electrolyte additive outside the range described above.

Furthermore, the electrolyte composition according to the present invention includes an electrolyte additive including one or more species among the compounds represented by Formula 1, along with an auxiliary additive including one or more species among vinylene carbonate (VC), vinyl ethylene carbonate (VEC), fluoro ethylene carbonate (FEC), propane sultone (PS), and 1, 3-propane sultone (PRS), ethylene sulfate (ESa), succinonitrile (SN), adiponitrile (AN), and hexane tricarbonitrile (HTCN), gamma-butyrolactone (GBL), biphenyl (BP), cyclohexyl benzene (CHB), and tert-amyl benzene (TAB).

In one example, the auxiliary additive may include one or more of vinylene carbonate (VC), vinyl ethylene carbonate (VEC), fluoroethylene carbonate (FEC), or propane sulfone (PS).

By including these auxiliary additives, the electrolyte composition can reduce gas generated during the charging and discharging of the secondary battery, and can effectively prevent the elution of metal ions from the electrode, which increases the resistance and reduces the capacity of the cell, thereby improving the performance and high temperature safety of the battery.

Two or more of these auxiliary additives may be used in combination, in which case the auxiliary additives may include vinylene carbonate (VC) and fluoroethylene carbonate (FEC); vinylene carbonate (VC) and vinylethylene carbonate (VEC); or vinylene carbonate (VC), vinylethylene carbonate (VEC) and fluoroethylene carbonate (FEC).

In this case, the auxiliary additive may include the combined auxiliary additives in a certain ratio. Specifically, the auxiliary additive may include 50 to 200 parts by weight of the remaining compounds relative to 100 parts by weight of vinylene carbonate (VC), more specifically, 50 to 150 parts by weight; 50 to 100 parts by weight; or 100 to 200 parts by weight, in which case the auxiliary additive may further improve safety at high temperatures.

In addition, the auxiliary additive described above may be adjusted to a certain content to exhibit a synergy effect with the electrolyte additive. Specifically, the auxiliary additive may be included from 0.01 to 10% by weight based on the total weight of the electrolyte composition, more specifically, from 1 to 10 wt%, from 3 to 8 wt%, from 0.1 to 3.0 wt%, from 1 to 4 wt%, from 5 to 10 wt%, from 4 to 6 wt%, or from 4.5 to 6.5 wt% based on the total weight of the electrolyte composition. By adjusting the content of the auxiliary additive to the above range, the present invention can prevent the initial resistance of the battery from increasing significantly due to an excess of the auxiliary additive, and can prevent the safety improvement

effect at high temperature from being implemented insignificantly due to a small amount of the auxiliary additive.

Meanwhile, the lithium salt used in the electrolyte composition may be any lithium salt known in the art for use in non-aqueous electrolytes, without being particularly limited. Specifically, the lithium salts may include one or more of LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, or $(FSO_2)_2NLi$.

As to the concentration of these lithium salts, there is no particular limitation, but a lower limit of a suitable concentration range is 0.5 mol/L or more, more particularly 0.7 mol/L or more, more particularly 0.9 mol/L or more, and an upper limit of 2.5 mol/L or less, more particularly 2.0 mol/L or less, more particularly 1.5 mol/L or less. When the concentration of lithium salt is lower than 0.5 mol/L, there is a possibility that the cycle characteristics and output characteristics of the non-aqueous electrolyte cell may be degraded due to a decrease in ionic conductivity. In addition, if the concentration of lithium salts exceeds 2.5 mol/L, the viscosity of the electrolyte for the non-aqueous electrolyte cell increases, which may also reduce the ionic conductivity and may reduce the cycle characteristics and output characteristics of the non-aqueous electrolyte cell.

In addition, when a large amount of lithium salt is dissolved in a non-aqueous organic solvent all at once, the liquid temperature may rise due to the heat of dissolution of the lithium salt. If the temperature of the non-aqueous organic solvent rises significantly due to the heat of dissolution of the lithium salts, there is a risk that fluorine-containing lithium salts may accelerate decomposition and produce hydrogen fluoride (HF). Therefore, the temperature at which the lithium salt is dissolved in the non-aqueous organic solvent is not particularly limited, but may be controlled from -20 to 80°C, and more particularly from 0 to 60°C.

Furthermore, the non-aqueous organic solvent used in the electrolyte composition may be any non-aqueous organic solvent used in the art for non-aqueous electrolytes, without being particularly limited. Specifically, as the non-aqueous organic solvents, for example, non-amphoteric organic solvents such as N-methyl-2-pyrrolidinone, ethylene carbonate (EC), propylene carbonate (PC), butylene carbonate, dimethyl carbonate (DMC), diethyl carbonate (DEC), gamma-butylolactone, 1,2-dimethoxyethane (DME), tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxymethane, dioxolane derivatives, sulfolane, methyl sulfolane, 1,3-dimethyl-2-imidazolidinone, propylene carbonate derivatives, tetrahydrofuran derivatives, ether, methyl pyrophosphate (MP), ethyl propionate (EP), propyl propionate (PP), and etc. may be used.

In addition, the non-aqueous organic solvent used in the present invention may be one type alone, or two or more types may be mixed in any combination and proportion to suit the application. Among them, from the viewpoint of electrochemical stability with respect to redox and chemical stability with respect to heat and reaction with solutes, propylene carbonate, ethylene carbonate, fluoroethylene carbonate, diethyl carbonate, dimethyl carbonate, and ethyl methyl carbonate are particularly preferred.

Meanwhile, the electrolyte composition may further include electrolyte additives in addition to the basic components described above. Without harming the essence of the present invention, electrolyte additives commonly used in non-aqueous electrolytes of the present invention may be added in any proportion. Specifically, compounds having overcharge prevention effects, negative electrode film formation effects, and positive electrode protection effects such as cyclohexylbenzene, biphenyl, t-butylbenzene, carbonate, vinyl ethylene carbonate, difluoroanisole, fluoroethylene carbonate, propanesulfone, succinonitrile, dimethylvinylene carbonate, and etc. can be exemplified. Additionally, it is also possible to use electrolytes for non-aqueous electrolyte batteries by gelling agents or cross-linking polymers, as in the case of non-aqueous electrolyte batteries called lithium polymer batteries.

## Lithium secondary battery

Furthermore, in an exemplary embodiment, the present invention provides a lithium secondary battery, the lithium secondary battery comprising

a positive electrode including one or more positive electrode active materials of lithium metal oxide represented by Formula 3 or Formula 4 below;
a negative electrode;
a separator interposed between the positive electrode and the negative electrode; and
an electrolyte composition according to above-described present invention:

[Formula 3] $Li_x[Ni_yCo_zMn_wM^1_v]O_2$

[Formula 4] $LiM^2_pMn_{(2-p)}O_4$

in Formula 3 and Formula 4 above,

$M^1$ is one or more element selected from W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are $1.0 \leq x \leq 1.30$, $0 \leq y < 1$, $0 \leq z \leq 1$, $0 \leq w \leq 1$, $0 \leq v \leq 0.1$, $y+z+w+v=1$,
$M^2$ is Ni, Co, or Fe, and
p is $0.05 \leq p \leq 0.6$.

The lithium secondary battery according to the present invention includes a positive electrode including a positive electrode active material, a negative electrode including a negative electrode active material, a separator interposed between the positive electrode and the negative electrode, and a lithium salt-containing non-aqueous electrolyte composition of the present invention as described above.

Specifically, the positive electrode includes a positive electrode composite layer prepared by applying, drying, and pressing a positive electrode active material onto a positive electrode current collector, which may optionally include a conductor, a binder, and other electrolyte additives as required.

Here, the positive electrode active material is a material capable of electrochemically reacting on the positive electrode current collector, and may include one or more species of lithium metal oxides represented by Formula 3 or Formula 4, which are capable of reversibly intercalating and deintercalating lithium ions.

The lithium metal oxides represented by Formula 3 and Formula 4 are materials containing a high content of nickel (Ni) and manganese (Mn), respectively, and have the advantage of being able to stably supply high capacity and/or high voltage electricity when used as a positive electrode active material.

Here, the lithium metal oxides represented by Formula 3 may include lithium cobalt oxide ($LiCoO_2$), lithium nickel oxide ($LiNiO_2$), lithium manganese oxide ($LiMnO_2$, $LiMn_2O_4$, etc.), lithium nickel cobalt manganese oxide ($LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$), and the like.

Furthermore, the lithium metal oxide represented by Formula 4 may include $LiNi_{0.7}Mn_{1.3}O_4$; $LiNi_{0.5}Mn_{1.5}O_4$; $LiNi_{0.3}Mn_{1.7}O_4$, and the like, which may be used alone or in combination.

In addition, the positive electrode can comprise the positive electrode current collector, which has a high conductivity without causing chemical changes in the battery. For example, stainless steel, aluminum, nickel, titanium, calcined carbon, and the like can be used, and in the case of aluminum or stainless steel, those that are surface-treated with carbon, nickel, titanium, silver, and the like can also be used. Furthermore, the average thickness of the current collector may be suitably applied from 5 to 500 μm, taking into account the conductivity and total thickness of the positive electrode to be manufactured.

In addition, the negative electrode, like the positive electrode, has a negative electrode composite layer prepared by applying, drying, and pressing a negative electrode active material on a negative electrode current collector, and may optionally include a conductor, a binder, and other electrolyte additives as required.

The negative electrode active material may include a carbon material. Specifically, the carbon material refers to a material having carbon atoms as a main component, and such carbon material may include one or more species selected from natural graphite, artificial graphite, expanded graphite, hard carbon, carbon black, acetylene black, or ketjen black.

In addition, the negative electrode active material may include a silicon material in addition to the carbon material. The silicon material refers to a material having silicon atoms as the main component, and such silicon material may include silicon (Si), silicon carbide (SiC), silicon monoxide (SiO), or silicon dioxide ($SiO_2$) alone or in combination. As the silicon (Si) containing materials, in the case in which silicon monoxide (SiO) and silicon dioxide ($SiO_2$) are uniformly mixed or compounded and included in the negative electrode composite layer, they may be denoted by silicon oxide ($SiO_q$, where $0.8 \leq q \leq 2.5$).

Furthermore, the silicon material may be included in 1 to 20% by weight relative to the total weight of the negative electrode active material, more specifically, it may be included in 3 to 10 wt% ; 8 to 15 wt% ; 13 to 18 wt% ; or 2 to 8 wt%. The present invention can maximize the energy density of the cell by adjusting the content of the silicon material to the above content range.

In addition, the negative electrode current collector is not particularly limited as long as it has a high conductivity without causing chemical changes in the cell, and for example, copper, stainless steel, nickel, titanium, calcined carbon, and the like can be used, and in the case of copper or stainless steel, those that are surface-treated with carbon, nickel, titanium, silver, and the like can also be used. Furthermore, the average thickness of the negative electrode current collector may be suitably applied from 1 to 500 μm, considering the conductivity and total thickness of the negative electrode to be manufactured.

Meanwhile, the separator interposed between the positive electrode and the negative electrode of each unit cell is an insulating thin film having high ionic permeability and mechanical strength, and is not particularly limited to those conventionally used in the art, but specifically, a polymer including one or more of the following polymers may be used: polypropylene; polyethylene; and polyethylene-propylene copolymers, which are chemically resistant and hydrophobic. The separator may be in the form of a porous polymeric material such as a sheet or nonwoven fabric including the polymer

described above, and in some cases may be in the form of a composite separator in which organic or inorganic particles are coated on the porous polymeric material by an organic binder. Furthermore, the separator may have an average pore diameter of 0.01 to 10 μm, and an average thickness of 5 to 300 μm.

Furthermore, the secondary battery includes a non-aqueous electrolyte composition according to the present invention as an electrolyte, wherein the electrolyte composition includes a non-aqueous organic solvent and a lithium salt, and including one or more electrolyte additives of the compounds represented by Formula 1 below

[Formula 1]

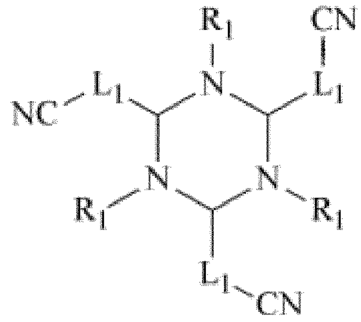

In Formula 1 above,

$R_1$ is hydrogen or an alkyl group having 1 to 4 carbons,
$L_1$ is directly bonded or alkylene groups having 1 to 4 carbons.

The electrolyte composition for a lithium secondary battery according to the present invention, by including a nitrile-based compound of Formula 1 having a structure in which a nitrile group is introduced into a six-membered cyclic hydrocarbon group symmetrically including three nitrogen atoms (N) as an electrolyte additive, can not only prevent elution of metals from an electrode active material or the like upon exposure to high temperatures, but also can stably and uniformly form organic and/or inorganic film on the surface of the positive electrode and/or negative electrode upon activation, it is possible to inhibit the decomposition of the electrolyte and generation of gas when the battery is exposed to high temperature.

Specifically, the nitrogen atoms contained within the six-membered ring cyclic hydrocarbon group in the nitrile-based compounds represented by Formula 1 have a strong complexing action on transition metals, so when applied as additives to the electrolyte composition, it can directly participate in the solvation shell of lithium ions even at low potentials during the initial charge-discharge, that is, the activation of the battery, resulting in the uniform formation of a negatively charged and/or inorganic film on the negative electrode surface through reduction reactions, and at the same time, can uniformly form an inorganic film on the positive electrode surface through oxidation reactions. These films can inhibit the decomposition of the electrolyte and the generation of gas when the lithium secondary battery is exposed to high temperatures, thereby improving the safety issues caused by the ignition and/or explosion of the secondary battery.

In addition, the nitrile group of the nitrile-based compound is introduced into the carbon atom of the six-membered hydrocarbon group containing three nitrogen atoms, which is less exposed to the influence of the nitrogen atom and can easily interact with the metals eluted from the positive electrode active material or the electrode current collector, thereby preventing the lifespan of the battery from deteriorating due to the release of metals in the electrolyte when exposed to high temperature.

Furthermore, the electrolyte additive is included in the electrolyte composition at a specific content. Specifically, the electrolyte additive is included in an amount of 0.01 to 30 wt% based on the total weight of the electrolyte composition, more specifically, 0.01 to 20 wt%; 0.01 to 10 wt%; 0.01 to 5 wt%; 5 to 10 wt%; 10 to 30 wt%; 15 to 25 wt%; or 10 to 20 wt% based on the total weight of the electrolyte composition. By using an excessive amount of electrolyte additive outside the above-described range, the present invention can prevent the wettability with respect to the electrode and the separator from being reduced due to an increase in the viscosity of the electrolyte composition, and at the same time prevent decrease in the performance of the battery due to a reduction in ionic conductivity of the electrolyte composition. In addition, the present invention can prevent the effect of the electrolyte additive from being minimally implemented by using a small amount of electrolyte additive outside the above-described range.

By having the above-described configuration, the lithium secondary battery according to the present invention can improve storage characteristics and life characteristics at high temperature by strengthening the film on each surface of the positive electrode and the negative electrode when the battery is activated, and can prevent the decomposition of the electrolyte during charging and discharging, so there is an advantage of effectively reducing the gas being generated.

[Mode for carrying out the invention]

Hereinafter, the present invention is described in more detail by means of examples and experimental examples.

However, the following examples and experimental examples are only illustrative of the present invention, and the contents of the invention are not limited to the following examples.

**Examples 1-9 and Comparative Examples 1-3. Preparation of electrolyte composition for lithium secondary battery**

As a lithium salt, $LiPF_6$ was dissolved into a solvent in which ethylene carbonate (EC), ethyl methyl carbonate (EMC), ethyl propionate (EP) and propyl propionate (PP) were mixed in a 1:1:1:1 volume ratio to a concentration of 1M. Then, a non-aqueous electrolyte composition was prepared by dissolving one or more compounds represented by Formula 1, Formula 3, or Formula 7 as an electrolyte additive; and vinylethylene carbonate (VEC) or propane sulfone (PS) as an auxiliary additive, respectively, in a weighed amount as shown in Table 1 below. Here, the added electrolyte additives and auxiliary additives based on the total weight of the electrolyte composition were weighed as shown in Table 1.

[Table 1, example 6 does not fall under the scope of the invention as claimed in the appended claims]

| Unit: wt% | Electrolyte Additive | | | Auxiliary Additive | |
|---|---|---|---|---|---|
| | [Structural Formula 1] 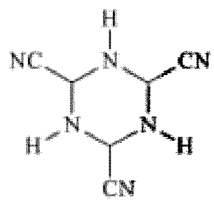 | [Structural Formula 3] 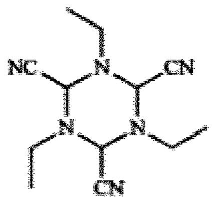 | [Structural Formula 7] 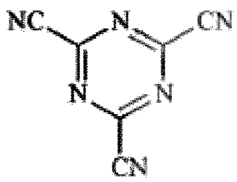 | VEC | PS |
| Example 1 | 0.5 | - | - | - | - |
| Example 2 | 10 | - | - | - | - |
| Example 3 | 30 | - | - | - | - |
| Example 4 | 35 | - | - | - | - |
| Example 5 | - | 10 | - | - | - |
| Example 6 | - | - | 10 | - | - |
| Example 7 | 10 | - | 2 | - | - |
| Example 8 | 10 | - | - | 5 | - |
| Example 9 | 10 | - | - | - | 5 |
| Comparative Example 1 | - | - | - | - | - |
| Comparative Example 2 | - | - | - | 5 | - |
| Comparative Example 3 | - | - | - | - | 5 |

**Comparative Example 4. Preparation of electrolyte composition for lithium secondary battery**

As an electrolyte additive, a lithium secondary battery was prepared by performing the same method as in Example 2, except that a compound represented by the following Formula 5 instead of the compound represented by the Formula 1 was used.

[Formula 5]

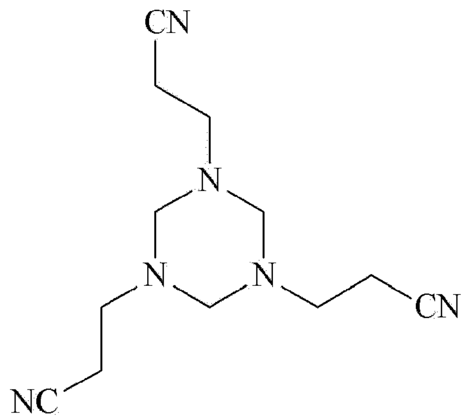

**Comparative Example 5. Preparation of electrolyte composition for lithium secondary battery**

As an electrolyte additive, a lithium secondary battery was prepared by performing the same method as in Example 2, except that the compound represented by the following Formula 6 was used.

[Formula 6]

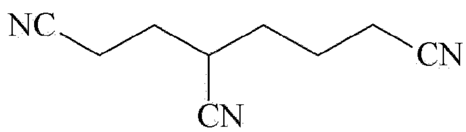

**Examples 10-18 and Comparative Examples 6-10. Preparation of lithium secondary battery**

$LiCoO_2$ with a particle size of 5 μm was prepared as a positive electrode active material, which was mixed with polyvinylidene fluoride as a carbon-based conductor and a binder in a weight ratio of 94:3:3 in N-methyl pyrrolidone (NMP) to form a slurry, cast on an aluminum thin plate, dried in a vacuum oven at 120°C, and rolled to prepare a positive electrode.
Separately, a negative electrode active material in which natural graphite and artificial graphite were mixed in a weight ratio of 1:1 was prepared, and 97 parts by weight of the negative electrode active material and 3 parts by weight of styrene butadiene rubber (SBR) were mixed with water to form a slurry, cast on a copper thin plate, dried in a 130°C vacuum oven, and rolled to prepare a negative electrode.
A separator made of 18 μm thick polypropylene was interposed on the above obtained positive electrode and negative electrode, inserted into a case. And then the electrolyte composition (5 mℓ) prepared in Examples 1-9 and Comparative Examples 1-5 as shown in Table 2 below was injected to prepare a 3Ah small pouch-type lithium secondary battery.

[Table 2, example 15 does not fall under the scope of the invention as claimed in the appended claims]

| | Type of electrolyte composition |
|---|---|
| Example 10 | Electrolyte composition of Example 1 |
| Example 11 | Electrolyte composition of Example 2 |
| Example 12 | Electrolyte composition of Example 3 |
| Example 13 | Electrolyte composition of Example 4 |
| Example 14 | Electrolyte composition of Example 5 |
| Example 15 | Electrolyte composition of Example 6 |
| Example 16 | Electrolyte composition of Example 7 |
| Example 17 | Electrolyte composition of Example 8 |

(continued)

| | Type of electrolyte composition |
|---|---|
| Example 18 | Electrolyte composition of Example 9 |
| Comparative Example 6 | Electrolyte composition of Comparative Example 1 |
| Comparative Example 7 | Electrolyte composition of Comparative Example 2 |
| Comparative Example 8 | Electrolyte composition of Comparative Example 3 |
| Comparative Example 9 | Electrolyte composition of Comparative Example 4 |
| Comparative Example 10 | Electrolyte composition of Comparative Example 5 |

**Experimental Example.**

To evaluate the performance of the lithium secondary battery according to the present invention, the following experiments were performed.

A) High temperature life evaluation

The lithium secondary batteries of the Examples and Comparative Examples were each charged with a current of 200 mA (0.1C) to be activated, and the discharge capacity and resistance of each activated secondary battery were measured to set the initial capacity and initial resistance. Then, each activated lithium secondary battery was subjected to 100 cycles at 45±2°C, and the discharge capacity of each secondary battery was measured, and the results are shown in Table 3 below. Here, a single cycle was set to 4.2 V and 660 mA (0.33 C, 0.05 C cut-off) CC/CV charge and 2.5 V and 660 mA (0.33 C) CC discharge.

B) Evaluation of high temperature storage characteristics of the secondary battery

For the lithium secondary battery of the Examples and Comparative Examples, a 0.05C cut-off charge at 0.33C to 4.2V under constant current/constant voltage conditions was performed, and after discharging to 2.5V at 0.33C, the discharge capacity and resistance were measured as initial capacity and initial resistance. Then, a 0.05C cut-off charge was performed at 0.33C to 4.2V under constant current/constant voltage conditions for a full charge, and after 12 weeks of storage at 45°C, the residual capacity and resistance of each stored lithium secondary battery were measured. The results are shown in Table 3 below.

C) High temperature safety evaluation

For the lithium secondary battery of the Examples and Comparative Examples, a 0.05C cut-off charge was performed at a constant current/constant voltage condition at 0.33C to 4.2V, and after discharging to 2.5V at 0.33C, the discharge capacity and resistance were measured as initial capacity and initial resistance, respectively.

The fully charged secondary battery was placed in the oven, ramped to 140°C at a rate of 5°C/min, and left at 140°C for 1 hour, starting at 140°C, to observe whether the secondary battery ignited and/or exploded. Here, if no ignition and/or explosion of the secondary battery occurred, it was evaluated as "O", and if it occurred, it was evaluated as "X", and the results are shown in Table 3 below.

[Table 3, example 15 does not fall under the scope of the invention as claimed in the appended claims]

| | Capacity retention rate after 100 cycles | Capacity retention rate after high-temperature storage | High temperature safety |
|---|---|---|---|
| Example 10 | 96% | 97% | O |
| Example 11 | 96% | 98% | O |
| Example 12 | 95% | 98% | O |
| Example 13 | 76% | 77% | O |
| Example 14 | 94% | 96% | O |
| Example 15 | 95% | 96% | O |

(continued)

| | Capacity retention rate after 100 cycles | Capacity retention rate after high-temperature storage | High temperature safety |
|---|---|---|---|
| Example 16 | 97% | 99% | O |
| Example 17 | 96% | 99% | O |
| Example 18 | 97% | 98% | O |
| Comparative Example 6 | 75% | 77% | X |
| Comparative Example 7 | 81% | 81% | X |
| Comparative Example 8 | 80% | 82% | X |
| Comparative Example 9 | 90% | 89% | X |
| Comparative Example 10 | 88% | 87% | X |

As shown in Table 3 above, it can be seen that the electrolyte composition according to the present invention contains one or more compounds represented by Formula 1 or Formula 2 as an electrolyte additive to improve the high temperature characteristics of the lithium secondary battery.

Specifically, the secondary batteries of the examples according to the present invention exhibited high capacity retention rates exceeding 90% under both high temperature charge/discharge and storage conditions, and were found not to ignite or explode when exposed to high temperatures exceeding 100°C.

This indicates that the compounds represented by Formula 1 contained in the electrolyte composition as electrolyte additives inhibit the elution of metals from the electrode active material into the electrolyte during high temperature exposure of the secondary battery, thereby maintaining high performance of the battery, while participating in the formation of films on the positive electrode and negative electrode surfaces during activation of the secondary battery, thereby inhibiting decomposition of the electrolyte at high temperatures and reducing internal gas generation.

From these results, it can be seen that the electrolyte composition of the present invention can effectively reduce the gas generated during charging and discharging of the lithium secondary battery by including one or more electrolyte additives of the compound represented by Formula 1 as well as strengthen the SEI layer on the electrode surface, thereby improving the storage characteristics and life characteristics at high temperatures.

It can be seen that in the example of the secondary battery including the compound represented by Formula 1 as an electrolyte additive, even when exposed to high temperature conditions, the decomposition of the electrolyte is reduced due to the film formed on the surface of the positive electrode and negative electrode, significantly reducing the amount of gas generated, and the phenomenon of OCV drop generated at the positive electrode is reduced.

Although the above description has been described with reference to a preferred exemplary embodiment of the present invention, it will be understood by those skilled in the art or having ordinary knowledge of the art that various modifications and changes can be made to the present invention without departing from the scope of the present invention and technology described in the following claims.

Therefore, the technical scope of the present invention is not limited to what is described in the detailed description of the specification, but should be determined by the claims.

## Claims

**1.** An electrolyte composition for a lithium secondary battery, the electrolyte composition comprising:

a non-aqueous organic solvent;
a lithium salt; and
an electrolyte additive comprising one or more of the compounds represented by Formula 1,
wherein the electrolyte additive is included in 0.01 to 30 wt.% based on a total weight of the electrolyte composition:

[Formula 1]

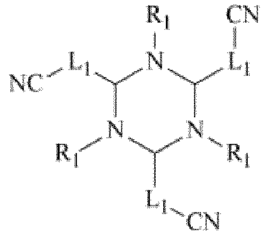

in Formula 1,

$R_1$ is hydrogen or an alkyl group having 1 to 4 carbons,
$L_1$ is directly bonded or alkylene groups having 1 to 4 carbons.

**2.** The electrolyte composition for a lithium secondary battery of claim 1, wherein $R_1$ is hydrogen, a methyl group, an ethyl group, or a propyl group, and
$L_1$ is directly bonded, a methylene group, an ethylene group, or a propylene group.

**3.** The electrolyte composition for a lithium secondary battery of claim 1, wherein the compound represented by Formula 1 include one or more of compounds represented by <Structural Formula 1> to <Structural Formula 6>:

<Structural Formula 1>

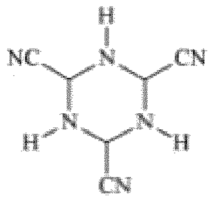

<Structural Formula 2>

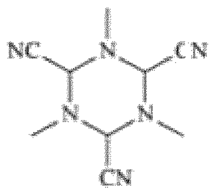

<Structural Formula 3>

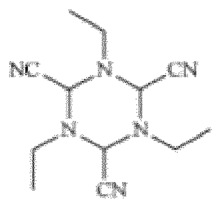

<Structural Formula 4>

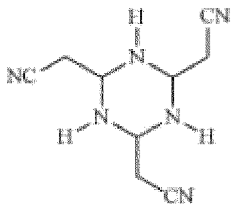

<Structural Formula 5>

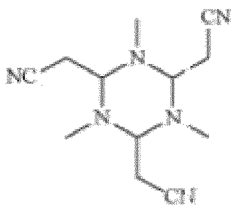

<Structural Formula 6>

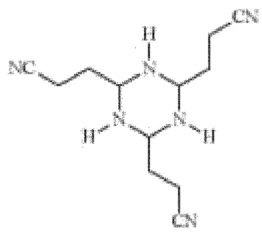

**4.** The electrolyte composition for a lithium secondary battery of claim 1, the electrolyte additive further comprises one or more of the compounds represented by Formula 2:

[Formula 2]

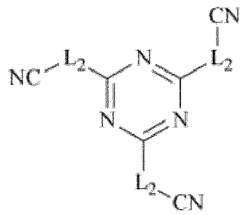

in Formula 2,
$L_2$ is directly bonded or alkylene groups having 1 to 4 carbons.

**5.** The electrolyte composition for a lithium secondary battery of claim 1, $L_2$ is directly bonded, a methylene group, an ethylene group, or a propylene group.

**6.** The electrolyte composition for a lithium secondary battery of claim 4, wherein the compound represented by Formula 2 include one or more of compounds represented by <Structural Formula 7> or <Structural Formula 8>:

<Structural Formula 7>

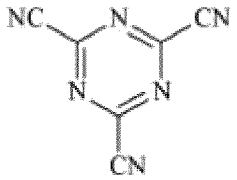

<Structural Formula 8>

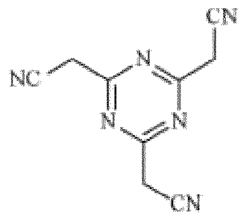

**7.** The electrolyte composition for a lithium secondary battery of claim 4, wherein the electrolyte additive includes the compound represented by Formula 1 and the compound represented by Formula 2 in a 1:0.05 to 20 weight ratio.

**8.** The electrolyte composition for a lithium secondary battery of claim 1, wherein the electrolyte composition further comprises one or more auxiliary additives selected from vinylene carbonate (VC), vinyl ethylene carbonate (VEC), fluoroethylene carbonate (FEC), propane sulfone (PS), 1,3-propane sulfone (PRS), ethylene sulfate (ESa), succinonitrile (SN), adiponitrile (AN), hexane tricarbonitrile (HTCN), gamma-butyrolactone (GBL), biphenyl (BP), cyclohexyl benzene (CHB), or tert-amyl benzene (TAB).

**9.** The electrolyte composition for a lithium secondary battery of claim 1, wherein the lithium salt comprises one or more species selected from LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, or $(FSO_2)_2NLi$.

**10.** The electrolyte composition for a lithium secondary battery of claim 1, wherein the non-aqueous organic solvent comprises one or more solvent selected from N-methyl-2-pyrrolidinone, ethylene carbonate, propylene carbonate, butylene carbonate, dimethyl carbonate, diethyl carbonate, gamma-butyrolactone, 1,2-dimethoxyethane, tetrahydrofuran, dimethyl sulfoxide, formamide, dimethylformamide, dioxolane, acetonitrile, nitromethane, methyl formate, methyl acetate, phosphoric acid triester, trimethoxymethane, dioxolane derivative, sulfolane, methyl sulfolane, 1,3-dimethyl-2-imidazolidinone, propylene carbonate derivative, tetrahydrofuran derivative, ether, methyl pyrophosphate, and ethyl propionate.

**11.** A lithium secondary battery, the lithium secondary battery comprising:

a positive electrode comprising one or more positive electrode active material among lithium metal oxide represented by Formula 3 or Formula 4;
a negative electrode comprising negative electrode active material;
a separator interposed between the positive electrode and the negative electrode; and
the electrolyte composition according to claim 1:

[Formula 3] $Li_x[Ni_yCo_zMn_yM^1_v]O_2$

$LiM^2_pMn_{(2-p)}O_4$

in Formula 3 and Formula 4,

$M^1$ is one or more element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, wherein x, y, z, w, and v are $1.0 \leq x \leq 1.30$, $0 \leq y < 1$, $0 \leq z \leq 1$, $0 \leq w \leq 1$, $0 \leq v \leq 0.1$, respectively,

$$y+z+w+v=1,$$

$M^2$ is Ni, Co, or Fe, and

p is 0.05≤p≤0.6.

**12.** The lithium secondary battery of claim 11, wherein the positive electrode active material comprises one or more species selected from $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, or $LiNi_{0.5}Mn_{1.5}O_4$.

**13.** The lithium secondary battery of claim 11 wherein the negative electrode active material comprises one or more carbon materials selected from natural graphite, artificial graphite, expanded graphite, hard carbon, carbon black, acetylene black, or ketjen black.

**14.** The lithium secondary battery of claim 11, wherein the negative electrode active material comprises one or more silicon materials of silicon (Si), silicon carbide (SiC), or silicon oxide ($SiO_q$, where $0.8 \le q \le 2.5$).

**15.** The lithium secondary battery of claim 14, wherein the silicon material is included at 1 to 20wt% based on a total weight of the negative electrode active material.

## Patentansprüche

**1.** Elektrolytzusammensetzung für eine Lithiumsekundärbatterie, wobei die Elektrolytzusammensetzung umfasst:

ein nichtwässriges organisches Lösungsmittel;
ein Lithiumsalz; und
ein Elektrolytadditiv, umfassend eine oder mehr Verbindungen, dargestellt durch Formel 1,
wobei das Elektrolytadditiv zu 0,01 bis 30 Gew.-%, bezogen auf ein Gesamtgewicht der Elektrolytzusammensetzung, enthalten ist:

[Formel 1]

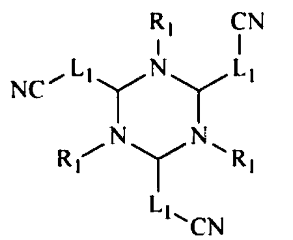

wobei in Formel 1

$R_1$ Wasserstoff oder eine Alkylgruppe mit 1 bis 4 Kohlenstoffatomen ist,
$L_1$ direkt gebunden oder Alkylengruppen mit 1 bis 4 Kohlenstoffatomen ist.

**2.** Elektrolytzusammensetzung für eine Lithiumsekundärbatterie gemäß Anspruch 1, wobei $R_1$ Wasserstoff, eine Methylgruppe, eine Ethylgruppe oder eine Propylgruppe ist, und
$L_1$ direkt gebunden, eine Methylengruppe, eine Ethylengruppe oder eine Propylengruppe ist.

**3.** Elektrolytzusammensetzung für eine Lithiumsekundärbatterie gemäß Anspruch 1, wobei die durch Formel 1 dargestellte Verbindung eine oder mehr Verbindungen, dargestellt durch <Strukturformel 1> bis <Strukturformel 6>, umfasst:

<Strukturformel 1>

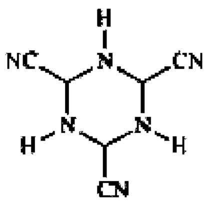

<Strukturformel 2>

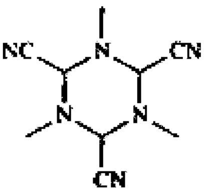

<Strukturformel 3>

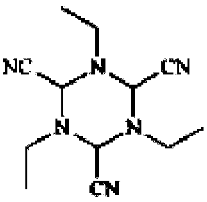

<Strukturformel 4>

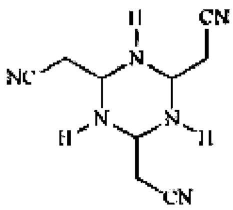

<Strukturformel 5>

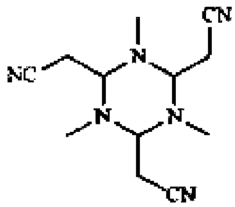

<Strukturformel 6>

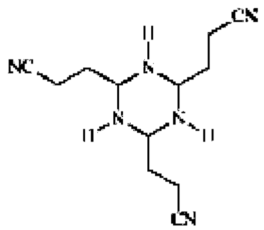

4. Elektrolytzusammensetzung für eine Lithiumsekundärbatterie gemäß Anspruch 1, wobei das Elektrolytadditiv ferner eine oder mehr Verbindungen, dargestellt durch Formel 2, umfasst:

[Formel 2]

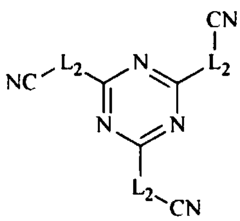

wobei in Formel 2
$L_2$ direkt gebunden oder Alkylengruppen mit 1 bis 4 Kohlenstoffatomen ist.

5. Elektrolytzusammensetzung für eine Lithiumsekundärbatterie gemäß Anspruch 1, wobei $L_2$ direkt gebunden, eine Methylengruppe, eine Ethylengruppe oder eine Propylengruppe ist.

6. Elektrolytzusammensetzung für eine Lithiumsekundärbatterie gemäß Anspruch 4, wobei die durch Formel 2 dargestellte Verbindung eine oder mehr Verbindungen, dargestellt durch <Strukturformel 7> oder <Strukturformel 8>, umfasst:

<Strukturformel 7>

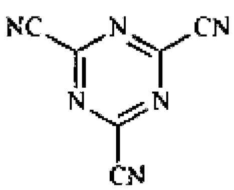

<Strukturformel 8>

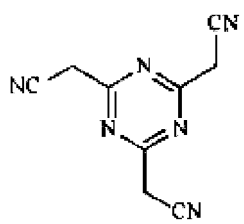

7. Elektrolytzusammensetzung für eine Lithiumsekundärbatterie gemäß Anspruch 4, wobei das Elektrolytadditiv die durch Formel 1 dargestellte Verbindung und die durch Formel 2 dargestellte Verbindung in einem Gewichtsverhältnis von 1:0,05 bis 20 enthält.

8. Elektrolytzusammensetzung für eine Lithiumsekundärbatterie gemäß Anspruch 1, wobei die Elektrolytzusammensetzung ferner ein oder mehr Hilfsadditive umfasst, die aus Vinylencarbonat (VC), Vinylethylencarbonat (VEC), Fluorethylencarbonat (FEC), Propansulfon (PS), 1,3-Propansulfon (PRS), Ethylensulfat (ESa), Succinonitril (SN), Adiponitril (AN), Hexantricarbonitril (HTCN), Gamma-Butyrolacton (GBL), Biphenyl (BP), Cyclohexylbenzol (CHB) und tert-Amylbenzol (TAB) ausgewählt sind.

**9.** Elektrolytzusammensetzung für eine Lithiumsekundärbatterie gemäß Anspruch 1, wobei das Lithiumsalz eine oder mehr Spezies umfasst, die aus LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$ und $(FSO_2)_2NLi$ ausgewählt sind.

**10.** Elektrolytzusammensetzung für eine Lithiumsekundärbatterie gemäß Anspruch 1, wobei das nichtwässrige organische Lösungsmittel ein oder mehr Lösungsmittel umfasst, die aus N-Methyl-2-pyrrolidinon, Ethylencarbonat, Propylencarbonat, Butylencarbonat, Dimethylcarbonat, Diethylcarbonat, Gamma-Butyrolacton, 1,2-Dimethoxyethan, Tetrahydrofuran, Dimethylsulfoxid, Formamid, Dimethylformamid, Dioxolan, Acetonitril, Nitromethan, Methylformiat, Methylacetat, Phosphorsäuretriester, Trimethoxymethan, Dioxolan-Derivat, Sulfolan, Methylsulfolan, 1,3-Dimethyl-2-imidazolidinon, Propylencarbonat-Derivat, Tetrahydrofuran-Derivat, Ether, Methylpyrophosphat und Ethylpropionat, ausgewählt sind.

**11.** Lithiumsekundärbatterie, wobei die Lithiumsekundärbatterie umfasst:

eine positive Elektrode, umfassend ein oder mehr Positivelektrodenaktivmaterialien der Lithiummetalloxide, dargestellt durch Formel 3 oder Formel 4;
eine negative Elektrode, umfassend ein Negativelektrodenaktivmaterial;
einen Separator, angeordnet zwischen der positiven Elektrode und der negativen Elektrode; und
die Elektrolytzusammensetzung gemäß Anspruch 1:

[Formel 3] $Li_x[Ni_yCo_zMn_wM^1_v]O_2$

$LiM^2_pMn_{(2-p)}O_4$

wobei in Formel 3 und Formel 4

$M^1$ ein oder mehr Elemente, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, ist, wobei x, y, z, w und v $1{,}0 \leq x \leq 1{,}30$, $0 \leq y < 1$, $0 \leq z \leq 1$, $0 \leq w \leq 1$ bzw. $0 \leq v$ $v \leq 0{,}1$ sind,

$$y + z + w + v = 1,$$

$M^2$ Ni, Co oder Fe ist, und
p $0{,}05 \leq p \leq 0{,}6$ ist.

**12.** Lithiumsekundärbatterie gemäß Anspruch 11, wobei das Positivelektrodenaktivmaterial eine oder mehr Spezies, ausgewählt aus $LiNi_{0,8}Co_{0,1}Mn_{0,1}O_2$, $LiNi_{0,6}Co_{0,2}Mn_{0,2}O_2$, $LiNi_{0,9}Co_{0,05}Mn_{0,05}O_2$, $LiNi_{0,6}Co_{0,2}Mn_{0,1}Al_{0,1}O_2$, $LiNi_{0,6}Co_{0,2}Mn_{0,15}Al_{0,05}O_2$, $LiNi_{0,7}Co_{0,7}Mn_{0,1}Al_{0,1}O_2$ und $LiNi_{0,3}Mn_{1,5}O_4$, umfasst

**13.** Lithiumsekundärbatterie gemäß Anspruch 11, wobei das Negativelektrodenaktivmaterial ein oder mehr Kohlenstoffmaterialien, ausgewählt aus natürlichem Graphit, künstlichem Graphit, expandiertem Graphit, Hartkohlenstoff, Ruß, Acetylenruß und Ketjen-Ruß, umfasst.

**14.** Lithiumsekundärbatterie gemäß Anspruch 11, wobei das Negativelektrodenaktivmaterial ein oder mehr Siliciummaterialien von Silicium (Si), Siliciumcarbid (SiC) und Siliciumoxid ($SiO_q$, wobei $0{,}8 \leq q \leq 2{,}5$) umfasst.

**15.** Lithiumsekundärbatterie gemäß Anspruch 14, wobei das Siliciummaterial zu 1 bis 20 Gew.-%, bezogen auf ein Gesamtgewicht des Negativelektrodenaktivmaterial, enthalten ist.

**Revendications**

**1.** Composition d'électrolyte pour une batterie secondaire au lithium, la composition d'électrolyte comprenant :

un solvant organique non aqueux ;
un sel de lithium ; et
un additif électrolytique comprenant un ou plusieurs des composés représentés par la Formule 1,
dans laquelle l'additif électrolytique est inclus à raison de 0,01 à 30 % en poids sur la base d'un poids total de la composition d'électrolyte :

[Formule 1]

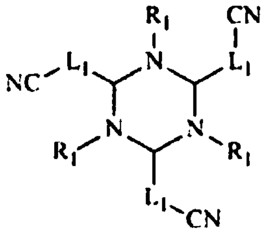

dans la Formule 1,

$R_1$ est l'hydrogène ou un groupe alkyle présentant 1 à 4 atomes de carbone,
$L_1$ est une liaison directe ou des groupes alkylène présentant 1 à 4 atomes de carbone.

**2.** Composition d'électrolyte pour une batterie secondaire au lithium selon la revendication 1, dans laquelle $R_1$ est l'hydrogène, un groupe méthyl, un groupe éthyl ou un groupe propyle, et
$L_1$ est une liaison directe, un groupe méthylène, un groupe éthylène ou un groupe propylène.

**3.** Composition d'électrolyte pour une batterie secondaire au lithium selon la revendication 1, dans laquelle le composé représenté par la Formule 1 inclut un ou plusieurs des composés représentés par la <Formule structurelle 1> à la <Formule structurelle 6> :

<Formule structurelle 1>

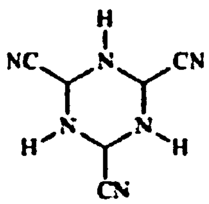

<Formule structurelle 2>

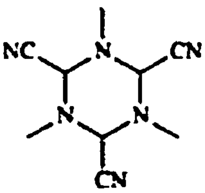

<Formule structurelle 3>

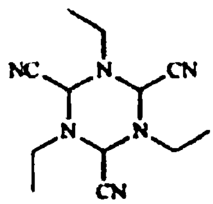

<Formule structurelle 4>

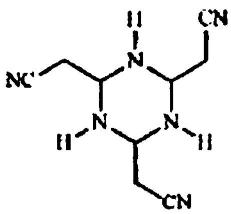

<Formule structurelle 5>

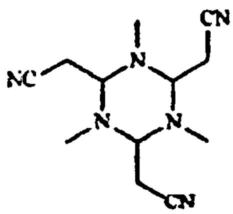

<Formule structurelle 6>

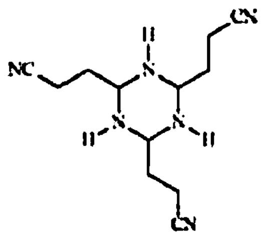

**4.** Composition d'électrolyte pour une batterie secondaire au lithium selon la revendication 1, l'additif électrolytique comprend en outre un ou plusieurs des composés représentés par la Formule 2 :

[Formule 2]

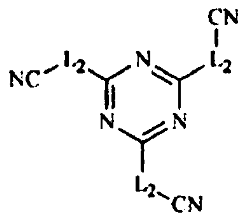

dans la Formule 2,
$L_2$ est une liaison directe ou des groupes alkylène présentant 1 à 4 atomes de carbone.

**5.** Composition d'électrolyte pour une batterie secondaire au lithium selon la revendication 1, $L_2$ est une liaison directe, un groupe méthylène, un groupe éthylène ou un groupe propylène.

**6.** Composition d'électrolyte pour une batterie secondaire au lithium selon la revendication 4, dans laquelle le composé représenté par la Formule 2 inclut un ou plusieurs des composés représentés par la <Formule structurelle 7> ou la <Formule structurelle 8> :

<Formule structurelle 7>

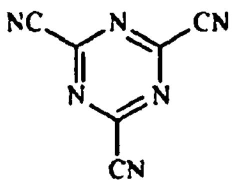

<Formule structurelle 8>

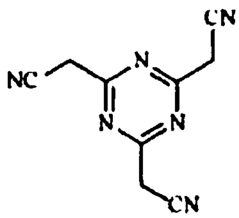

**7.** Composition d'électrolyte pour une batterie secondaire au lithium selon la revendication 4, dans laquelle l'additif électrolytique inclut le composé représenté par la Formule 1 et le composé représenté par la Formule 2 dans un rapport en poids de 1:0,05 à 20.

**8.** Composition d'électrolyte pour une batterie secondaire au lithium selon la revendication 1, dans laquelle la composition d'électrolyte comprend en outre un ou plusieurs additifs auxiliaires sélectionnés parmi le carbonate de vinylène (VC), le carbonate de vinyl éthylène (VEC), le carbonate de fluoroéthylène (FEC), la sulfone de propane (PS), la sulfone de 1,3-propane (PRS), le sulfate d'éthylène (ESa), le succinonitrile (SN), l'adiponitrile (AN), le tricarbonitrile d'hexane (HTCN), la gamma-butyrolactone (GBL), le biphényle (BP), le benzène cyclohexyle (CHB) ou le benzène tert-amyle (TAB).

**9.** Composition d'électrolyte pour une batterie secondaire au lithium selon la revendication 1, dans laquelle le sel de lithium comprend une ou plusieurs espèces sélectionnées parmi LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, ou $(FSO_2)_2NLi$.

**10.** Composition d'électrolyte pour une batterie secondaire au lithium selon la revendication 1, dans laquelle le solvant organique non aqueux comprend un ou plusieurs solvants sélectionnés parmi la N-méthyl-2-pyrrolidinone, le carbonate d'éthylène, le carbonate de propylène, le carbonate de butylène, le carbonate de diméthyle, le carbonate de diéthyle, la gamma-butyrolactone, le 1,2-diméthoxyéthane, le tétrahydrofurane, le diméthylsulfoxyde, le formamide, le diméthylformamide, le dioxolane, l'acétonitrile, le nitrométhane, le formate de méthyle, l'acétate de méthyle, le triester d'acide phosphorique, le triméthoxyméthane, le dérivé de dioxolane, le sulfolane, le sulfolane de méthyle, le 1,3-diméthyl-2-imidazolidinone, le dérivé de carbonate de propylène, le dérivé de tétrahydrofurane, l'éther, le pyrophosphate de méthyle et le propionate d'éthyle.

**11.** Batterie secondaire au lithium, la batterie secondaire au lithium comprenant :

une électrode positive comprenant un ou plusieurs matériaux actifs d'électrode positive parmi un oxyde de métal de lithium représenté par la Formule 3 ou la Formule 4 ;

une électrode négative comprenant un matériau actif d'électrode négative ;
un séparateur interposé entre l'électrode positive et l'électrode négative ; et
la composition d'électrolyte selon la revendication 1 :

[Formule 3] $Li_x[Ni_yCo_zMn_wM^1_v]O_2$

$LiM^2_pMn_{(2-p)}O_4$

dans la Formule 3 et la Formule 4,

$M^1$ est un ou plusieurs éléments sélectionnés parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, dans laquelle x, y, z, w et v sont tels que $1,0 \leq x \leq 1,30$, $0 \leq y \leq 1$, $0 \leq z \leq 1$, $0 \leq w \leq 1$, $0 \leq v \leq 0,1$, respectivement,

$$y+z+w+v=1,$$

$M^2$ est Ni, Co ou Fe, et
p est $0,05 \leq p \leq 0,6$.

**12.** Batterie secondaire au lithium selon la revendication 11, dans laquelle le matériau actif d'électrode positive comprend une ou plusieurs espèces sélectionnées parmi $LiNi_{0,8}Co_{0,1}Mn_{0,1}O_2$, $LiNi_{0,6}Co_{0,2}Mn_{0,2}O_2$, $LiNi_{0,9}Co_{0,05}Mn_{0,05}O_2$, $LiNi_{0,6}Co_{0,2}Mn_{0,1}Al_{0,1}O_2$, $LiNi_{0,6}Co_{0,2}Mn_{0,15}Al_{0,05}O_2$, LiNi0,7$Co_{0,1}Mn_{0,1}Al_{0,1}O_2$, ou $LiNi_{0,5}Mn_{1,5}O_4$.

**13.** Batterie secondaire au lithium selon la revendication 11 dans laquelle le matériau actif d'électrode négative comprend un ou plusieurs matériaux de carbone sélectionnés parmi le graphite naturel, le graphite artificiel, le graphite expansé, le carbone dur, le noir de carbone, le noir d'acétylène ou le noir de Ketjen.

**14.** Batterie secondaire au lithium selon la revendication 11, dans laquelle le matériau actif d'électrode négative comprend un ou plusieurs matériaux en silicium de silicium (Si), de carbure de silicium (SiC) ou d'oxyde de silicium ($SiO_q$, où $0,8 \leq q \leq 2,5$).

**15.** Batterie secondaire au lithium selon la revendication 14, dans laquelle le matériau en silicium est inclus à raison de 1 à 20 % en poids sur la base d'un poids total du matériau actif d'électrode négative.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220026714
- KR 1020210106817
- CN 114069043 A
- CN 103078140 A